# FASCICULE DE BREVET EUROPEEN

(11) **EP 0 894 996 B1**
(45) Date de publication et mention de la délivrance du brevet: **02.04.2003**
(21) Numéro de dépôt: 98401893.7
(22) Date de dépôt: 24.07.1998
(51) Int. Cl.: F16F 13/14

(54) **Support antivibratoire hydraulique**
Schwingungsdämpfendes Lager
Hydraulic damping support

(30) Priorité: 01.08.1997 FR 9709877
(43) Date de publication de la demande: 03.02.1999
(73) Titulaire: HUTCHINSON, 75008 Paris (FR)
(72) Inventeur: Reh, Denis, 28200 Thiville (FR); Monneau, Jean-Pierre, 28220 Saint Hilaire S/Yerre (FR)
(74) Mandataire: Burbaud, Eric

(56) Documents cités:
- EP-A- 0 646 735
- EP-A- 0 709 594

## Description

La présente invention est relative aux supports antivibratoires hydrauliques.

Plus particulièrement, l'invention concerne un support antivibratoire hydraulique, destiné à être interposé entre deux éléments rigides pour amortir des vibrations entre ces deux éléments essentiellement selon un premier axe, ce support comportant :
- des première et deuxième armatures rigides, solidarisables respectivement avec les deux éléments rigides à réunir, la deuxième armature étant constituée par une platine qui s'étend perpendiculairement au premier axe et qui présente une face dite de support, orientée vers la première armature,
- un corps en élastomère moulé d'une seule pièce qui relie la première armature à la platine et qui présente une base appliquée en contact étanche contre la face de support de la platine par simple serrage parallèlement au premier axe, le corps en élastomère comportant en outre une paroi épaisse en forme de cloche qui s'étend selon le premier axe en s'évasant depuis un sommet solidaire de la première armature jusqu'à la base dudit corps en élastomère,
- une chambre de travail remplie de liquide qui est délimitée par la paroi épaisse du corps en élastomère et par la face de support de la platine,
- une chambre de compensation remplie de liquide, qui est délimitée par une paroi mince librement déformable appartenant au corps en élastomère et par la face de support de la platine,
- un canal étranglé rempli de liquide, qui relie entre elles les première et deuxième chambres hydrauliques et qui est formé entre la base du corps en élastomère et la face de support de la platine,
- et une plaque ajourée rigide qui est noyée dans la base du corps en élastomère et qui est solidarisée avec la platine par sertissage pour appliquer en contact étanche la base du corps en élastomère contre la face de support de la platine, cette plaque ajourée présentant, sur une partie de sa périphérie, une rigole qui fait saillie axialement à l'opposé de la platine et qui est ouverte axialement vers la face de support de ladite platine, cette rigole délimitant le canal étranglé avec la face de support de la platine, et ladite rigole présentant une paroi latérale radialement intérieure, une paroi latérale radialement extérieure et un fond qui relie entre elles les parois latérales intérieure et extérieure.

Le document EP-A-0 646 735 décrit un exemple de support antivibratoire hydraulique du type visé ci-dessus.

La présente invention a notamment pour but de perfectionner ce support antivibratoire connu en améliorant son étanchéité.

A cet effet, selon l'invention, un support antivibratoire hydraulique du genre en question est essentiellement caractérisé en ce que la paroi latérale extérieure de la rigole se prolonge de façon continue sur toute la périphérie de la plaque ajourée.

Grâce à ces dispositions, on augmente nettement la rigidité de la plaque ajourée, de sorte que cette plaque applique plus fortement et plus sûrement la base du corps en élastomère contre la face de support de la platine, en tout point de ladite base.

De plus, l'augmentation de rigidité de la plaque ajourée la rend moins fragile et diminue les risques de déformation accidentelle de cette plaque ajourée au cours du processus de fabrication du support antivibratoire, en diminuant par conséquent les risques de défauts d'étanchéité du support antivibratoire.

Dans des modes de réalisation préférés de l'invention, on peut éventuellement avoir recours en outre à l'une et/ou à l'autre des dispositions suivantes :
- les chambres de travail et de compensation, dites l'une première chambre et l'autre deuxième chambre, sont juxtaposées de façon non concentrique sur la platine, la rigole entourant partiellement la première chambre et s'étendant entre des première et deuxième extrémités qui sont adjacentes à la deuxième chambre, la première extrémité étant obturée par le corps en élastomère, le canal étranglé communiquant avec la première chambre au voisinage de ladite première extrémité, et la deuxième extrémité communiquant avec la deuxième chambre ;
- la base du corps en élastomère présente, au niveau de la première extrémité de la rigole, un creux qui délimite avec la face de support de la platine un passage de fuite faisant communiquer le canal étranglé avec la deuxième chambre en court-circuitant au moins une partie dudit canal étranglé, le passage de fuite présentant une première section et le canal étranglé présentant une deuxième section, cette deuxième section étant supérieure à dix fois la première section ;
- la paroi latérale intérieure de la rigole est une paroi périphérique qui entoure complètement la première chambre en formant une entretoise rigide qui sépare les première et deuxième chambres ;
- la plaque ajourée et la base du corps en élastomère forment, au niveau de l'entretoise de ladite plaque ajourée, un creux qui délimite avec la face de support de la platine un passage de fuite faisant communiquer la première chambre avec la deuxième chambre en court-circuitant le canal étranglé, le passage de fuite présentant une première section et le canal étranglé présentant une deuxième section, cette deuxième section étant supérieure à dix fois la première section ;
- la première chambre est la chambre de travail et la deuxième chambre est la chambre de compensation ;
- la plaque ajourée comporte en outre des premier et deuxième évidements qui correspondent l'un à la chambre de travail et l'autre à la chambre de compensation ,
- la plaque ajourée est réalisée en tôle découpée et emboutie, la rigole étant constituée par un embouti de ladite plaque ajourée ;
- la base du corps en élastomère présente à sa périphérie, d'une part, au moins deux bords opposés, dits bords de fixation, le long desquels est réalisé ledit sertissage, et d'autre part, au moins deux bords libres qui séparent les bords de fixation, la plaque ajourée présentant elle-même des bords libres qui sont noyés dans les bords libres de la base du corps en élastomère et qui sont simplement en appui axial contre la face de support de la platine ;
- le support antivibratoire comporte en outre un capot rigide qui recouvre au moins partiellement la paroi épaisse du corps en élastomère de façon à limiter les débattements de la première armature par rapport à la platine, ce capot présentant des zones de fixation qui s'étendent parallèlement à la platine et qui sont solidarisées avec cette platine au voisinage des bords libres de la base du corps en élastomère, lesdits bords libres de la plaque ajourée et de la base de ce corps en élastomère étant serrés selon le premier axe entre la face de support de la platine et ledit capot ;
- la base du corps en élastomère présente deux bords de fixation séparés l'un de l'autre par deux bords libres, le capot présentant une forme générale en Ω ouvert selon un deuxième axe perpendiculaire audit premier axe, avec deux ailes de fixation formant lesdites zones de fixation, et la première armature se présente sous la forme d'un organe rigide allongé s'étendant longitudinalement selon ledit deuxième axe.

D'autres caractéristiques et avantages de l'invention apparaîtront au cours de la description suivante de plusieurs de ses formes de réalisation, données à titre d'exemples non limitatifs, en regard des dessins joints.

Sur les dessins :
- la figure 1 est une vue de dessus d'un support antivibratoire hydraulique selon une forme de réalisation de l'invention,
- la figure 2 est une vue en coupe selon la ligne II-II de la figure 1,
- la figure 3 est une vue en coupe selon la ligne III-III de la figure 2,
- la figure 4 est une vue en perspective de la plaque ajourée appartenant au support antivibratoire des figures 1 à 3,
- la figure 5 est une vue de dessous en perspective du corps en élastomère appartenant au support antivibratoire, dans une première variante de l'invention,
- la figure 6 est une vue en coupe selon la ligne VI-VI de la figure 5,
- et les figures 7 et 8 sont des vues similaires aux figures 5 et 6, dans une deuxième variante de l'invention.

Sur les différentes figures, les mêmes références désignent des éléments identiques ou similaires.

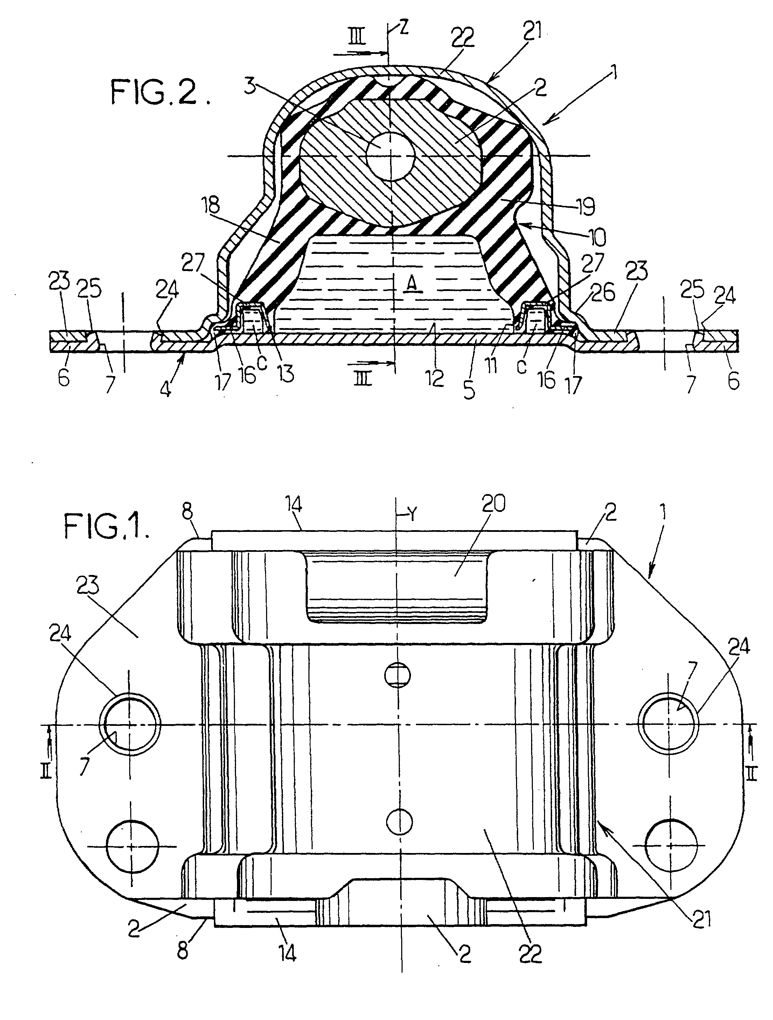

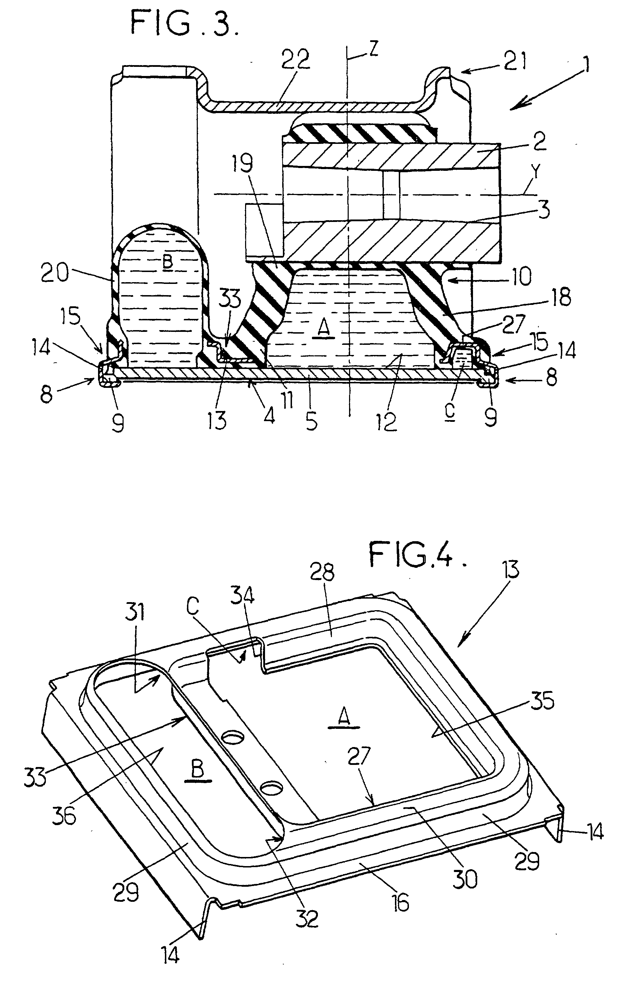

Le support antivibratoire hydraulique 1 représenté sur les figures 1 à 3 est destiné à être interposé entre deux éléments rigides tels qu'un châssis et un groupe motopropulseur de véhicule, pour supporter le groupe motopropulseur et pour amortir et filtrer des vibrations entre ces deux éléments, essentiellement selon un axe vertical Z.

Ce support antivibratoire comporte tout d'abord une première armature rigide 2 qui se présente sous la forme d'un organe métallique allongé s'étendant selon un axe Y perpendiculaire à l'axe Z et qui est percé d'un trou central 3 permettant sa fixation par exemple au groupe motopropulseur du véhicule.

Cette première armature 2 est disposée au-dessus d'une deuxième armature rigide 4, qui se présente sous la forme d'une platine métallique de forme générale sensiblement plane, s'étendant perpendiculairement à l'axe Z, c'est-à-dire horizontalement.

Cette platine 4 présente une partie centrale emboutie 5 de forme plane, qui est légèrement surélevée par rapport à deux ailes de fixation 6 encadrant ladite partie centrale.

Chacune de ces ailes 6 est pourvue d'au moins un trou de fixation 7 destiné à fixer la platine 4 au châssis du véhicule.

Bien entendu, la platine 4 pourrait être fixée au bloc motopropulseur et l'armature 2 au châssis, auquel cas l'armature 2 serait située sous la platine 4, la disposition de l'ensemble du support antivibratoire étant alors inversée par rapport à la disposition représentée sur les dessins.

Par ailleurs, la platine 4 présente deux bords latéraux 8 qui s'étendent chacun entre lès deux ailes de fixation 6 et qui forment respectivement des rebords ou lisières 9 en décrochement vers le bas par rapport à la partie centrale 5.

De plus, la platine 4 est reliée à l'armature 2 par un corps en élastomère 10 qui est moulé d'une seule pièce et qui présente une base 11 appliquée de façon étanche sur la face supérieure 12 ou face de support de la platine 4, par simple serrage axial parallèlement à l'axe Z.

Ce serrage axial est obtenu par sertissage d'une plaque métallique rigide 13, ajourée et emboutie, qui est généralement réalisée en acier et qui est noyée dans la base 11 du corps en élastomère.

Plus particulièrement, cette plaque ajourée 13 présente deux pattes latérales 14 qui font saillie vers l'extérieur le long des rebords 9 à partir de deux bords opposés 15 de la base du corps en élastomère, et qui sont serties sur lesdits rebords 9.

Par ailleurs, les pattes 14 de la plaque ajourée 13 sont séparées l'une de l'autre par deux bords opposés 16 de ladite plaque, qui forment la périphérie de cette plaque ajourée avec les pattes 14 et qui constituent chacun une lisière plane parallèle au plan de la platine 4.

Ces deux bords libres 16 sont noyés dans la base 11 du corps en élastomère, qui forme ainsi également deux bords libres 17 en correspondance avec les bords 16, lesdits bords libres 16,17 étant simplement en appui axial contre la face supérieure 12 de la platine, sans sertissage.

Le corps en élastomère 10 comporte par ailleurs une paroi épaisse 18 en forme de cloche qui présente une résistance en compression suffisante pour servir de support au bloc motopropulseur. Cette paroi 18 s'étend en s'évasant vers le bas, depuis un sommet 19 adhérisé sur l'armature 2 jusqu'à la base 11 du corps en élastomère, en délimitant avec la face supérieure 12 de la platine une chambre de travail A remplie de liquide.

De plus, le corps en élastomère 10 forme en outre une membrane souple 20 également en forme de cloche, qui est librement déformable et qui délimite avec la face supérieure 12 de la platine une chambre de compensation B également remplie de liquide.

Les deux chambres A,B sont ainsi juxtaposées de façon non concentrique sur la face supérieure 12 de la platine, ces deux chambres pouvant être par exemple sensiblement alignées selon l'axe Y.

De plus, les deux chambres A,B communiquent ensemble par l'intermédiaire d'un canal étranglé C qui est délimité entre, d'une part, la face supérieure 12 de la platine, et d'autre part, une gorge ménagée dans la base 11 du corps en élastomère, la forme de cette gorge étant de préférence définie par des emboutis de la plaque ajourée 13.

Ce canal étranglé C permet ainsi des transferts de liquide entre les chambres A et B, afin d'amortir des vibrations entre l'armature 2 et la platine 4, essentiellement selon l'axe Z.

Enfin, pour limiter les débattements relatifs de l'armature 2 par rapport à la platine 4, le support antivibratoire comporte en outre un capot métallique rigide 21, qui est profilé sensiblement en forme de Ω et qui présente deux faces axiales ouvertes parallèlement à l'axe Y.

Ce capot 21 présente une partie centrale 22 qui peut coopérer par butée avec des bossages du corps en élastomère et qui est encadrée par deux ailes 23 horizontales qui reposent sur les ailes de fixation 6 de la platine.

Ces ailes 23 présentent respectivement des trous de fixation 24 en correspondance avec les trous de fixation 7 des ailes 6, de façon que la platine 4 et le capot 21 puissent être fixés ensemble par vissage sur le châssis du véhicule.

De plus, les ailes 23 et 6 sont avantageusement fixées l'une à l'autre par sertissage.

Par exemple, ce sertissage peut être réalisé en évasant des portions 25 de la platine 4 à l'intérieur des trous 24 des ailes du capot, lesquels trous ont dans ce cas une forme tronconique évasée vers le haut.

Enfin, entre sa partie centrale 22 et chacune de ses ailes 23, le capot comporte en outre un ressaut 26 formant une zone d'appui qui s'applique parallèlement à l'axe Z contre les bords libres 16, 17 de la plaque ajourée et de la base du corps en élastomère, en plaquant ainsi ces bords libres contre la face supérieure 12 de la platine.

On garantit ainsi un serrage calibré des bords libres 16,17 sur la platine 4, en évitant toute fuite de liquide entre ladite platine et la base du corps en élastomère au niveau desdits bords libres 16,17.

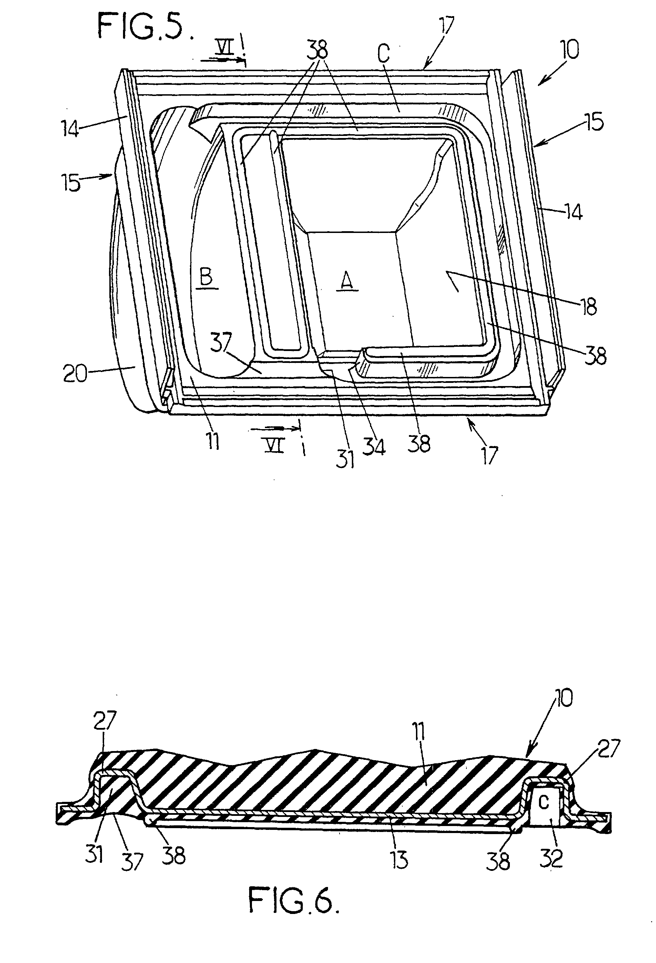

De plus, compte tenu du fait que l'étanchéité du support antivibratoire dépend pour partie de la raideur de la plaque de tôle ajourée 13 perpendiculairement à son plan, on augmente cette raideur en prolongeant sur toute la périphérie de cette plaque l'embouti qui délimite le canal étranglé 13, de façon à former une nervure de renforcement périphérique, comme on peut le voir sur la figure 4.

Plus particulièrement, l'embouti qui délimite le canal étranglé C forme une rigole 27 qui fait saillie à l'opposé de la platine 4 qui est ouverte vers la face de support 12 de cette platine.

Cette rigole 27 présente une paroi latérale radialement intérieure 28, une paroi latérale radialement extérieure 29, et un fond 30 qui relie entre elles les parois latérales intérieure et extérieure.

La rigole 27 s'étend sur trois côtés autour de la chambre de travail A, entre deux extrémités 31,32 qui sont adjacentes à la chambre de compensation B. Bien entendu, la rigole 27 pourrait s'étendre autour de la chambre de compensation B au lieu de la chambre de travail A.

De plus, la paroi latérale extérieure 29 se prolonge au-delà desdites extrémités 31,32 de la rigole en passant à l'extérieur de la chambre de compensation B, en formant ainsi la nervure périphérique continue susmentionnée.

De plus, la rigidité de la plaque ajourée 13 est encore augmentée par le fait que la paroi latérale intérieure 28 se prolonge vers l'intérieur au-delà des extrémités 31,32 de la rigole, de façon à former aussi une paroi périphérique qui entoure complètement la chambre de travail A en constituant une entretoise rigide 33 séparant les première et deuxième chambres.

Dans l'exemple considéré, cette paroi latérale 28 comporte néanmoins, au voisinage de l'extrémité 31 de la rigole, une ouverture 34 qui fait communiquer le canal étranglé C avec la chambre de travail A (l'ouverture 34 pourrait le cas échéant être remplacée notamment par un embouti ménagé dans la platine 4).

Cette ouverture 34 ne communique pas directement avec la chambre de compensation B, dans la mesure où la première extrémité 31 de la rigole 27 est obturée par l'élastomère, lors du moulage du corps en élastomère 10, l'extrémité 32 de la rigole restant quant à elle dégagée de façon à faire communiquer le canal étranglé C avec la chambre de compensation B.

Enfin, la plaque ajourée 13 présente deux évidements 35,36, découpés respectivement en correspondance avec la chambre de travail A et avec la chambre de compensation B, pour permettre le moulage de ces chambres.

Dans ce qui suit sont décrites deux variantes du support antivibratoire hydraulique des figures 1 à 4. Dans ces deux variantes, le support antivibratoire est similaire à celui des figures 1 à 4, et ne sera donc pas décrit à nouveau en détail.

Selon une première variante, comme représenté sur les figures 5 et 6, la première extrémité 31 de la rigole 27 pourrait n'être que partiellement obturée par le corps en élastomère, la face inférieure de la base 11 formant alors un creux 37 en forme de gorge qui délimite avec la face de support 12 de la platine un passage de fuite faisant communiquer le canal étranglé C avec 1a chambre de compensation B en court-circuitant ledit canal étranglé.

La fuite calibrée créée par le passage de fuite susmentionné entre les chambres A et B, a un effet positif sur le fonctionnement du support antivibratoire, dans la mesure où cette fuite calibrée permet un amortissement efficace des vibrations dans une plus large plage de fréquences.

Le passage de fuite n'empêche néanmoins pas le fonctionnement du canal étranglé C, dans la mesure où, après montage du support antivibratoire, il présente une très faible section de passage, le canal étranglé C présentant généralement une section très supérieure à la section du passage de fuite, par exemple supérieure à 10 fois la section du passage de fuite.

Dans l'exemple considéré sur les figures 5 et 6, la base 11 du corps en élastomère présente des lèvres d'étanchéité 38 au niveau de sa face inférieure, notamment entre la chambre de travail A et la chambre de compensation B, ces lèvres d'étanchéité 38 étant interrompues au niveau de la gorge 37.

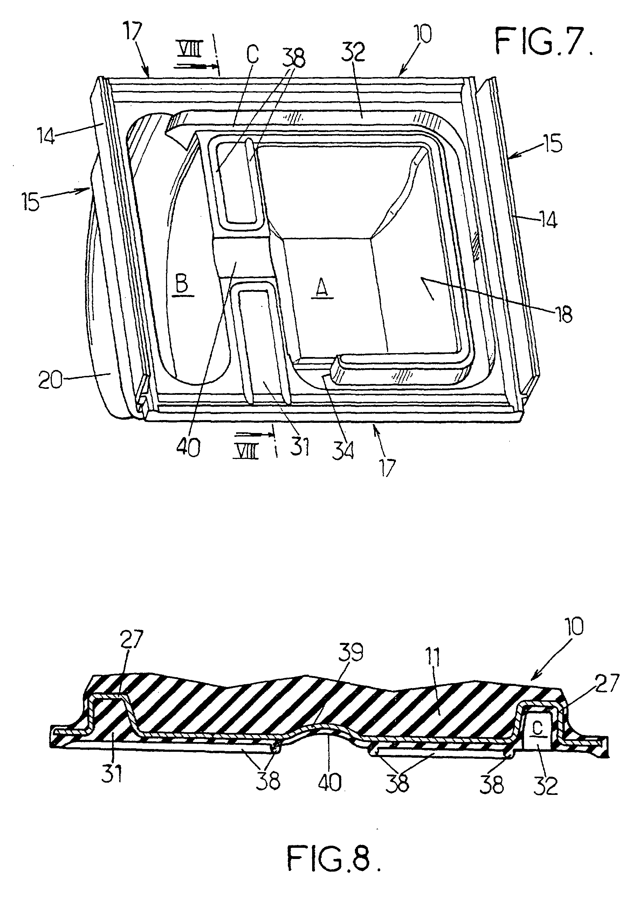

Selon une seconde variante de l'invention, représentée sur les figures 7 et 8, on met à profit la rigidité procurée par l'entretoise 33 pour définir avec précision un passage de fuite non plus au niveau de l'extrémité 31 de la rigole 27, mais au niveau de ladite entretoise 33.

Dans cette variante, la plaque ajourée 13 présente en effet un léger embouti 39 au niveau de l'entretoise 33, cet embouti 39 ainsi que la face inférieure de la base 11 du corps en élastomère formant une gorge 40 qui relie directement la chambre de travail A à la chambre de compensation B.

Comme dans la variante des figures 5 et 6, les nervures d'étanchéité 38 sont interrompues au niveau de la gorge 40, et ladite gorge présente des caractéristiques dimensionnelles similaires à celles déjà décrites en regard des figures 5 et 6.

## Revendications

1. Support antivibratoire hydraulique, destiné à être interposé entre deux éléments rigides pour amortir des vibrations entre ces deux éléments essentiellement selon un premier axe (Z), ce support comportant :
- des première et deuxième armatures rigides (2,4), solidarisables respectivement avec les deux éléments rigides à réunir, la deuxième armature (4) étant constituée par une platine qui s'étend perpendiculairement au premier axe (Z) et qui présente une face dite de support (12), orientée vers la première armature,
- un corps en élastomère (10) moulé d'une seule pièce qui relie la première armature (2) à la platine (4) et qui présente une base (11) appliquée en contact étanche contre la face de support (12) de la platine par simple serrage parallèlement au premier axe (Z), le corps en élastomère comportant en outre une paroi épaisse (18) en forme de cloche qui s'étend selon le premier axe (Z) en s'évasant depuis un sommet (19) solidaire de la première armature jusqu'à la base (11) dudit corps en élastomère,
- une chambre de travail (A) remplie de liquide qui est délimitée par la paroi épaisse (18) du corps en élastomère et par la face de support (12) de la platine,
- une chambre de compensation (B) remplie de liquide, qui est délimitée par une paroi mince (20) librement déformable appartenant au corps en élastomère (4) et par la face de support (12) de la platine,
- un canal étranglé (C) rempli de liquide, qui relie entre elles les première et deuxième chambres hydrauliques (A,B) et qui est formé entre la base (11) du corps en élastomère et la face de support (12) de la platine,
- et une plaque ajourée rigide (13) qui est noyée dans la base (11) du corps en élastomère et qui est solidarisée avec la platine (4) par sertissage pour appliquer en contact étanche la base (11) du corps en élastomère contre la face de support (12) de la platine, cette plaque ajourée présentant, sur une partie de sa périphérie, une rigole (27) qui fait saillie à l'opposé de la platine (4) et qui est ouverte vers la face de support (12) de ladite platine, cette rigole délimitant le canal étranglé (C) avec la face de support (12) de la platine, et ladite rigole présentant une paroi latérale radialement intérieure (28), une paroi latérale radialement extérieure (29) et un fond (30) qui relie entre elles les parois latérales intérieure et extérieure,
**caractérisé en ce que** la paroi latérale extérieure (29) de la rigole se prolonge de façon continue sur toute la périphérie de la plaque ajourée (13).

2. Support antivibratoire hydraulique selon la revendication 1, dans lequel les chambres de travail (A) et de compensation (B), dites l'une première chambre et l'autre deuxième chambre, sont juxtaposées de façon non concentrique sur la platine (4), la rigole (27) entourant partiellement la première chambre (A) et s'étendant entre des première et deuxième extrémités (31,32) qui sont adjacentes à la deuxième chambre, la première extrémité (31) étant obturée par le corps en élastomère (10), le canal étranglé (C) communiquant avec la première chambre (A) au voisinage de ladite première extrémité, et la deuxième extrémité (32) communiquant avec la deuxième chambre (B).

3. Support antivibratoire hydraulique selon la revendication 2, dans lequel la base (11) du corps en élastomère présente, au niveau de la première extrémité (31) de la rigole, un creux (37) qui délimite avec la face de support (12) de la platine un passage de fuite faisant communiquer le canal étranglé (C) avec la deuxième chambre (B) en court-circuitant au moins une partie dudit canal étranglé, le passage de fuite présentant une première section et le canal étranglé présentant une deuxième section, cette deuxième section étant supérieure à dix fois la première section.

4. Support antivibratoire hydraulique selon la revendication 2 ou la revendication 3, dans lequel la paroi latérale intérieure (28) de la rigole est une paroi périphérique qui entoure complètement la première chambre (A) en formant une entretoise rigide (33) qui sépare les première et deuxième chambres (A,B).

5. Support antivibratoire hydraulique selon la revendication 4, dans lequel la plaque ajourée (13) et la base (11) du corps en élastomère forment, au niveau de l'entretoise (33) de ladite plaque ajourée, un creux (40) qui délimite avec la face de support (12) de la platine un passage de fuite faisant communiquer la première chambre (A) avec la deuxième chambre (B) en court-circuitant le canal étranglé (C), le passage de fuite présentant une première section et le canal étranglé présentant une deuxième section, cette deuxième section étant supérieure à dix fois la première section.

6. Support antivibratoire hydraulique selon l'une quelconque des revendications 2 à 5, dans lequel la première chambre est la chambre de travail (A) et la deuxième chambre est la chambre de compensation (B).

7. Support antivibratoire hydraulique selon l'une quelconque des revendications précédentes, dans lequel la plaque ajourée (13) comporte en outre des premier et deuxième évidements (35,36) qui correspondent l'un à la chambre de travail (A) et l'autre à la chambre de compensation (B).

8. Support antivibratoire hydraulique selon l'une quelconque des revendications précédentes, dans lequel la plaque ajourée (13) est réalisée en tôle découpée et emboutie, la rigole (27) étant constituée par un embouti de ladite plaque ajourée.

9. Support antivibratoire hydraulique selon l'une quelconque des revendications précédentes, dans lequel la base (11) du corps en élastomère présente à sa périphérie, d'une part, au moins deux bords opposés (15), dits bords de fixation, le long desquels est réalisé ledit sertissage, et d'autre part, au moins deux bords libres (17) qui séparent les bords de fixation (15), la plaque ajourée (13) présentant elle-même des bords libres (16) qui sont noyés dans les bords libres (17) de la base du corps en élastomère et qui sont simplement en appui axial contre la face de support (12) de la platine.

10. Support antivibratoire hydraulique selon la revendication 9, comportant en outre un capot rigide (21) qui recouvre au moins partiellement la paroi épaisse (18) du corps en élastomère de façon à limiter les débattements de la première armature (2) par rapport à la platine (4), ce capot présentant des zones de fixation (23) qui s'étendent parallèlement à la platine (4) et qui sont solidarisées avec cette platine au voisinage des bords libres (17) de la base du corps en élastomère, lesdits bords libres (16,17) de la plaque ajourée et de la base de ce corps en élastomère étant serrés selon le premier axe (Z) entre la face de support (12) de la platine et ledit capot (21).

11. Support antivibratoire hydraulique selon la revendication 10, dans lequel la base (11) du corps en élastomère présente deux bords de fixation (15) séparés l'un de l'autre par deux bords libres (17), le capot (21) présentant une forme générale en Ω ouvert selon un deuxième axe (Y) perpendiculaire audit premier axe (Z), avec deux ailes de fixation (23) formant lesdites zones de fixation, et la première armature (2) se présente sous la forme d'un organe rigide allongé s'étendant longitudinalement selon ledit deuxième axe (Y).

## Patentansprüche

1. Hydraulisches schwingungsdämpfendes Lager, das dazu vorgesehen ist, zwischen zwei starren Elementen angeordnet zu werden, um Schwingbewegungen zwischen diesen beiden Elementen im wesentlichen in der Richtung einer ersten Achse (Z) zu dämpfen, bestehend aus:
- einer ersten und einer zweiten starren Halterung (2, 4), die mit den beiden zu verbindenden starren Elementen fest verbunden werden können, wobei die zweite Halterung (4) von einer Platte gebildet wird, die sich im rechten Winkel zu der ersten Achse (Z) erstreckt und eine sogenannte Auflageseite (12) aufweist, die der ersten Halterung zugekehrt ist,
- einem einstückig geformten Elastomerkörper (10), der die erste Halterung (2) mit der Platte (4) verbindet und eine Basis (11) aufweist, die durch einfaches Festziehen parallel zur ersten Achse (Z) in dichtem Kontakt an die Auflageseite (12) der Platte (4) gedrückt ist, wobei der Elastomerkörper ferner eine dicke Wand (18) in der Form einer Glocke aufweist, die sich auf der ersten Achse (Z) erstreckt und sich dabei von einer mit der ersten Halterung fest verbundenen Spitze (19) bis zu der Basis (11) dieses Elastomerkörpers hin erweitert,
- einer mit Flüssigkeit gefüllten Arbeitskammer (A), die von der dicken Wand (18) des Elastomerkörpers und von der Auflageseite (12) der Platte (4) umgrenzt wird,
- einer mit Flüssigkeit gefüllten Ausgleichskammer (B), die von einer frei verformbaren, dünnen Wand (20), die Teil des Elastomerkörpers ist, und der Auflageseite (12) der Platte (4) umgrenzt wird,
- einem mit Flüssigkeit gefüllten engen Kanal (C), der die erste und die zweite Hydraulikkammer (A, B) miteinander verbindet und zwischen der Basis (11) des Elastomerkörpers und der Auflageseite (12) der Platte (4) gebildet ist, und
- einer starren, durchbrochenen Platte (13), die in der Basis (11) des Elastomerkörpers versenkt und mit der Platte (4) durch eine Bördelverbindung fest verbunden ist, um die Basis (11) des Elastomerkörpers in dichten Kontakt mit der Auflageseite (12) der Platte (4) zu bringen, wobei diese durchbrochene Platte auf einem Teil ihres Außenumfangs eine Rinne (27) aufweist, die auf der von der Platte (4) abgewandten Seite hervorsteht und zur Auflageseite (12) dieser Platte (4) hin offen ist, wobei diese Rinne mit der Aullageseite (12) der Platte (4) den engen Kanal (C) umgrenzt, und wobei diese Rinne eine radial innen gelegene Seitenwand (28), eine radial außen gelegene Seitenwand (29) und einen Boden (30), der die innen gelegene und die außen gelegene Seitenwand miteinander verbindet, aufweist,
**dadurch gekennzeichnet,**
**dass** die außen gelegene Seitenwand (29) der Rinne sich kontinuierlich über den gesamten Außenumfang der durchbrochenen Platte (13) fortsetzt.

2. Hydraulisches schwingungsdämpfendes Lager nach Anspruch 1, bei dem die Arbeitskammer (A) und die Ausgleichskammer (B), von denen die eine erste Kammer genannt und die andere zweite Kammer genannt wird, auf der Platte (4) nicht konzentrisch nebeneinander liegen, wobei die Rinne (27) die erste Kammer (A) teilweise umgibt und sich zwischen einem ersten und einem zweiten Ende (31, 32) erstreckt, welche an die zweite Kammer angrenzen, wobei das erste Ende (31) durch den Elastomerkörper (10) verschlossen wird, wobei der enge Kanal (C) im Bereich dieses ersten Endes mit der ersten Kammer (A) kommuniziert und das zweite Ende (32) mit der zweiten Kammer (B) kommuniziert.

3. Hydraulisches schwingungsdämpfendes Lager nach Anspruch 2, bei dem die Basis (11) des Elastomerkörpers im Bereich des ersten Endes (31) der Rinne einen Hohlraum (37) aufweist, der zusammen mit der Auflageseite (12) der Platte (4) einen Fluchtweg umgrenzt, durch den der enge Kanal (C) mit der zweiten Kammer (B) kommuniziert, indem wenigstens ein Teil dieses engen Kanals (C) kurzgeschlossen wird, wobei der Fluchtweg einen ersten Querschnitt aufweist und der enge Kanal einen zweiten Querschnitt aufweist, wobei dieser zweite Querschnitt um das Zehnfache größer ist als der erste Querschnitt.

4. Hydraulisches schwingungsdämpfendes Lager nach Anspruch 2 oder 3, bei dem die radial innen gelegene Seitenwand (28) der Rinne eine umlaufende Wand ist, die die erste Kammer (A) vollständig umgibt, wobei sie eine starre Trennwand (33) bildet, die die erste und die zweite Kammer (A, B) voneinander trennt.

5. Hydraulisches schwingungsdämpfendes Lager nach Anspruch 4, bei dem die durchbrochene Platte (13) und die Basis (11) des Elastomerkörpers im Bereich der starren Trennwand (33) dieser durchbrochenen Platte einen Hohlraum (40) aufweist, der zusammen mit der Auflageseite (12) der Platte (4) einen Fluchtweg umgrenzt, durch den die erste Kammer (A) mit der zweiten Kammer (B) kommuniziert, indem der enge Kanal (C) kurzgeschlossen wird, wobei der Fluchtweg einen ersten Querschnitt aufweist und der enge Kanal einen zweiten Querschnitt aufweist, wobei dieser zweite Querschnitt um das Zehnfache größer ist als der erste Querschnitt.

6. Hydraulisches schwingungsdämpfendes Lager nach einem der Ansprüche 2 bis 5, bei dem die erste Kammer die Arbeitskammer (A) ist und die zweite Kammer die Ausgleichskammer (B) ist.

7. Hydraulisches schwingungsdämpfendes Lager nach einem der vorherigen Ansprüche, bei dem die durchbrochene Platte (13) ferner eine erste und eine zweite Aussparung (35, 36) aufweist, von denen die eine mit der Arbeitskammer (A) ist und die andere mit der Ausgleichskammer (B) kommuniziert.

8. Hydraulisches schwingungsdämpfendes Lager nach einem der vorherigen Ansprüche, bei dem die durchbrochene Platte (13) aus einem geschnittenen Buckelblech hergestellt wird, wobei die Rinne (27) aus einem Buckel dieser durchbrochenen Platte besteht.

9. Hydraulisches schwingungsdämpfendes Lager nach einem der vorherigen Ansprüche, bei dem die Basis (11) des Elastomerkörpers an ihrer Umfangslinie einerseits mindestens zwei gegenüberliegende Kanten (15), so genannte Befestigungskanten, aufweist, an denen entlang die genannte Bördelverbindung ausgeführt ist, und andererseits mindestens zwei freie Kanten (17) aufweist, die die Befestigungskanten (15) voneinander trennen, wobei die durchbrochene Platte (13) ihrerseits freie Kanten (16) aufweist, die in den freien Kanten (17) der Basis des Elastomerkörpers versenkt sind und sich einfach in axialer Anlage an der Auflageseite (12) der Platte (4) befinden.

10. Hydraulisches schwingungsdämpfendes Lager nach Anspruch 9, das ferner eine starre Haube (21) aufweist, die wenigstens teilweise die dicke Wand (18) des Elastomerkörpers bedeckt, so dass die Ausschläge der ersten Halterung (2) gegenüber der Platte (4) begrenzt werden, wobei diese Haube Befestigungsbereiche (23) aufweist, die sich parallel zu der Platte (4) erstrecken und mit dieser Platte im Bereich der freien Kanten (17) der Basis des Elastomerkörpers fest verbunden sind, wobei diese freien Kanten (16, 17) der durchbrochenen Platte und der Basis des Elastomerkörpers auf einer ersten Achse (Z) zwischen der Auflageseite (12) der Platte (4) und dieser Haube (21) festgezogen sind.

11. Hydraulisches schwingungsdämpfendes Lager nach Anspruch 10, bei dem die Basis (11) des Elastomerkörpers zwei Befestigungskanten (15) aufweist, die voneinander durch zwei freie Kanten (17) getrennt werden, wobei die Haube (21) die allgemeine Form eines Ω hat, das auf einer zweiten Achse (Y) offen ist, die im rechten Winkel zu der ersten Achse (Z) verläuft, wobei zwei Befestigungsflügel (23) die genannten Befestigungsbereiche bilden und die erste Halterung (2) als starres, längliches Organ ausgeführt ist, das sich in Längsrichtung auf der genannten zweiten Achse (Y) erstreckt.

## Claims

1. A hydraulic antivibration support designed to be interposed between two rigid elements to damp vibration between said two elements essentially along a first axis (Z), the support comprising:
• first and second rigid strength members (2, 4) suitable for securing respectively to the two rigid elements to be united, the second strength (4) being constituted by a plate which extends perpendicularly to the first axis (Z) and which has a "support" face (12) facing towards the first strength member;
• an elastomer body (10) in the form of a one-piece molding connecting the first strength member (2) to the plate (4) and having a base (11) pressed in sealing contact against the support face (12) of the plate merely by clamping parallel to the first axis (Z), the elastomer body further including a thick bell-shaped wall (12) extending along the first axis (Z) and flaring to the base (11) of said elastomer body from a top (19) secured to the first strength member;
• a liquid-filled working chamber (A) defined by the thick wall (18) of the elastomer body and by the support plate (12) of the plate;
• a liquid-filled compensation chamber (B) defined by a freely-deformable thin wall (20) belonging to the elastomer body (4) and by the support face (12) of the plate;
• a liquid-filled narrow channel (C) interconnecting the first and second liquid-filled chambers (A, B) and which is formed between the base (11) of the elastomer body and the support face (12) of the plate; and
• a rigid perforated insert (13) embedded in the base (11) of the elastomer body and secured to the plate (4) by crimping to press the base (11) of the elastomer body in sealing contact against the support face (12) of the plate, said perforated insert presenting, on a portion of its periphery, a corrugation (27) projecting away from the plate (4) and open towards the support face (12) of said plate, said corrugation co-operating with the support face (12) of the plate to define the narrow channel (C), and said corrugation having a radially inner side wall (28), a radially outer side wall (29), and a web (30) interconnecting the inner and outer side walls;
the support **being characterized in that** the outer side wall (29) of the corrugation extends continuously around the entire periphery of the perforated insert (13).

2. A hydraulic antivibration support according to claim 1, in which the working and compensation chambers (A, B), one of which constitutes a first chamber and the other a second chamber, are juxtaposed in non-concentric manner on the plate (4), the corrugation (27) partially surrounding the first chamber (A) and extending between first and second ends (31, 32) which are adjacent to the second chamber, the first end (31) being closed by the elastomer body (10), the narrow channel (C) communicating with the first chamber (A) in the vicinity of said first end, and the second end (32) communicating with the second chamber (B).

3. A hydraulic antivibration support according to claim 2, in which the base (11) of the elastomer body has a hollow (37) at the first end (31) of the corrugation, which hollow (37) co-operates with the support face (12) of the plate to define a leakage passage putting the narrow channel (C) into communication with the second chamber (B) and short-circuiting at least a portion of said narrow channel, the leakage passage having a first section and the narrow channel having a second section, said second section being greater than ten times the first section.

4. A hydraulic antivibration support according to claim 2 or claim 3, in which the inner side wall (28) of the corrugation is a peripheral wall completely surrounding the first chamber (A) and forming a rigid spacer (33) between the first and second chambers (A, B).

5. A hydraulic antivibration support according to claim 4, in which the perforated insert (13) and the base (11) of the elastomer body form a hollow (40) in the spacer (33) of said perforated insert, which hollow (40) co-operates with the support face (12) of the plate to define a leakage passage putting the first chamber (A) into communication with the second chamber (B) and short-circuiting the narrow channel (C), the leakage passage having a first section and the narrow channel having a second section, said second section being greater than ten times the first section.

6. A hydraulic antivibration support according to any one of claims 2 to 5, in which the first chamber is the working chamber (A) and the second chamber is the compensation chamber (B).

7. A hydraulic antivibration support according to any preceding claim, in which the perforated insert (13) further includes first and second cutouts (35, 36), one corresponding to the working chamber (A) and the other to the compensation chamber (B).

8. A hydraulic antivibration support according to any preceding claim, in which the perforated insert (13) is made of cut and stamped sheet metal, the corrugation (27) being constituted by stamping said perforated insert.

9. A hydraulic antivibration support according to any preceding claim, in which, at its periphery the base (11) of the elastomer body has firstly at least two opposite "fixing" edges (15) along which said crimping is performed, and secondly at least two free edges (17) interconnecting the fixing edges (15), the perforated insert (13) itself having free edges (16) which are embedded in the free edges (17) of the base of the elastomer body and which are merely pressed axially against the support face (12) of the plate.

10. A hydraulic antivibration support according to claim 9, further including a rigid cover (21) covering the thick wall (18) of the elastomer body, at least in part, thereby limiting displacement of the first strength member (2) relative to the plate (4), said cap having fixing zones (23) extending parallel to the plate (4) and secured to said plate in the vicinity of the free edges (17) of the base of the elastomer body, said free edges (16, 17) of the perforated insert and of the base of the elastomer body being clamped together along the first axis (Z) between the support face (12) of the plate and said cap (21).

11. A hydraulic antivibration support according to claim 10, in which the base (11) of the elastomer body has two fixing edges (15) interconnected by two free edges (17), the cap (21) being generally Ω-shaped, being open along a second axis (Y) perpendicular to said first axis (Z), with two fixing flanges (23) forming said fixing zones, and the first strength member (2) is in the form of an elongate rigid member extending longitudinally along said second axis (Y).
